# EUROPEAN PATENT APPLICATION

(11) **EP 4 538 186 A1**
(43) Date of publication of application: **16.04.2025**
(21) Application number: 24192754.0
(22) Date of filing: 05.08.2024
(51) Int. Cl.: B65B 3/26, B65B 3/30, B65B 9/20, B65B 57/14, G01F 23/72, G01F 23/76

(54) **FILLING SYSTEM FOR FILLING A TUBE OF PACKAGING MATERIAL FOR THE PRODUCTION OF PACKAGES CONTAINING A POURABLE PRODUCT**

(30) Priority: 10.10.2023 IT 202300021036
(71) Applicant: Tetra Laval Holdings & Finance S.A., 1009 Pully (CH)
(72) Inventor: SANIBONDI, Paolo, 41123 Modena (IT); APPARUTI, Daniele, 41123 Modena (IT)
(74) Representative: Tetra Pak - Patent Attorneys SE

(57) **Abstract**

There is described a filling system for filling a tube (3) of packaging material for the production of packages (2) containing pourable product, and comprising: a pipe (8) extending along a longitudinal axis (A), and configured for feeding pourable product into the tube (3); a floater (10) movably coupled with the pipe (8) and configured to be arranged within the tube (3) for floating in the pourable product; the floater (10) has a through hole (11) engaged by the pipe (8), is movable with respect to the pipe (8) along the axial direction, and is provided with at least one magnet (12) configured to magnetically interact with a magnetic reader (13) for detecting a level of the pourable product within the tube (3); the pipe (8) and the floater (10) are shaped so as to prevent or at least limit a rotation of the floater (10), with respect to the pipe (8), about said longitudinal axis (A).

## Description

### TECHNICAL FIELD

The present invention relates to a filling system for filling a tube of packaging material for the production of packages containing a pourable product, preferably a pourable food product.

In particular, the present invention refers, without loss of generality, to a filling system which is part of a packaging apparatus configured to produce sealed and folded packages containing a pourable product.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material. The packaging material has a multilayer structure comprising a base layer, e.g. made of paper, covered on both sides with layers of heat-seal plastic material, e.g. polyethylene.

In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging apparatuses, which form and fill the packages starting from a multilayer web of packaging material.

In particular, in such packaging apparatuses a continuous tube is formed from the web of packaging material which is initially wound in a reel and fed through a plurality of unwinding rollers. The web of packaging material is typically sterilized in the packaging apparatus, e.g. by applying a chemical sterilizing agent, such as hydrogen peroxide solution, which, once sterilization is completed, is removed from the surfaces of the packaging material, e.g. evaporated by heating. The web so sterilized is then maintained in a closed, sterile environment, and, while advanced by the aforementioned unwinding rollers, is folded to form the tube by means of a known web folding unit and then sealed longitudinally.

In order to perform the package forming operations, the tube is continuously fed along a first direction, normally a straight vertical direction, is filled with the sterilized food product from above and is formed, sealed and subsequently cut along equally spaced transversal cross-sections extending along a second direction, normally a direction orthogonal to the first direction.

So-called pillow packs are obtained thereby, which have a longitudinal sealing band, a top transversal sealing band and a bottom transversal sealing band.

Typically, a packaging apparatus of the above type comprises a filling system configured to fill the tube (from above) with the pourable product, while the tube is continuously formed and advanced along said first direction.

In detail, the filling system comprises a pipe which is inserted and surrounded by the tube in formation and which delivers the pourable product in the tube, so that a column of pourable product is defined and maintained within the tube. The pipe has a longitudinal axis usually arranged parallel to said first direction.

As it is known, the height of the column of pourable product within the tube determines the fluid-dynamic pressure on the packaging material, which is an important factor for correctly imparting the nominal form, shape and weight to the packages.

Therefore, the need for controlling the height of such column of pourable product within the tube, namely a level of the pourable product inside the tube, is known.

To this end, the filling system further comprises a sensor device for detecting the level of the pourable product inside the tube.

According to the known solutions, the sensor device comprises:
- a floater which is movably coupled with the pipe and thereby arranged within the tube so as to float in the pourable product, is movable with respect to the pipe along the axial direction, and is provided with a plurality of magnets; and
- a magnetic reader, which is carried by a stationary part of the packaging apparatus outside the tube, is magnetically coupled with the magnets of the floater and is exposed to a magnetic flux depending on the position of the floater inside the tube of packaging material and, therefore, on the level of the pourable product.

More precisely, a floater of the known type has a substantially cylindrical shape with a through hole in the middle, i.e. a tubular shape, and is provided with an array of magnets angularly distributed (i.e. arranged circularly) around the through hole.

The pipe is arranged engaging the through hole, so that the floater is free to axially move up and down, and about, the pipe, depending on the level of pourable product inside the tube.

Depending on the axial position of the floater, the magnetic flux between the magnets of the floater and the magnetic reader changes.

A control unit interprets such changes in the magnetic flux and outputs a filling level value.

An example of a known sensor device is disclosed in patent document EP1138595A1.

A need is felt in the sector for reducing the height of the column of pourable product inside the tube. In fact, the maximum height of the column ultimately impacts the overall height of the packaging apparatus, which is desirable to maintain as small as possible.

However, a predetermined amount of pourable product has to be maintained within the tube for the floater to be able to correctly float within the tube. Accordingly, if the height of the column, i.e. the level of the pourable product, inside the tube is lower than a predetermined value, it is not possible to use the known floaters and it is not possible to properly detect the filling level with the known floaters.

### DISCLOSURE OF INVENTION

It is therefore an object of the present invention to provide a filling system for filling a tube of packaging material for the production of packages containing a pourable product, which is designed to meet the above-mentioned need in a straightforward and low-cost manner.

This object is achieved by a filling system as claimed in claim 1. Preferred embodiments of the present invention are laid down in the appended dependent claims.

### BRIEF DESCRIPTION OF THE DRAWINGS

Non-limiting embodiments of the present invention will be described by way of example with reference to the accompanying drawings, in which:
Figure 1 is a schematic perspective view, with parts removed for clarity, of a packaging apparatus including a filling system according to the present invention;
Figure 2 is a larger-scale perspective view, with parts removed for clarity, of part of the filling system according to the present invention;
Figure 3 is a larger-scale and partially sectioned side view, with parts removed for clarity, of the part of the filling system of Figure 2;
Figure 4 is a schematic top view, with parts removed for clarity, of the filling system of Figure 2;
Figure 5 is a schematic top view, with parts removed for clarity, of an alternative embodiment of the filing system according to the present invention;
Figure 6 is a larger-scale, sectioned perspective view, with parts removed for clarity, of a floater of the filling system according to the invention; and
Figure 7 is a larger-scale, sectioned perspective view, with parts removed for clarity, of a floater of the filling system according to an alternative embodiment of the invention.

### BEST MODE FOR CARRYING OUT THE INVENTION

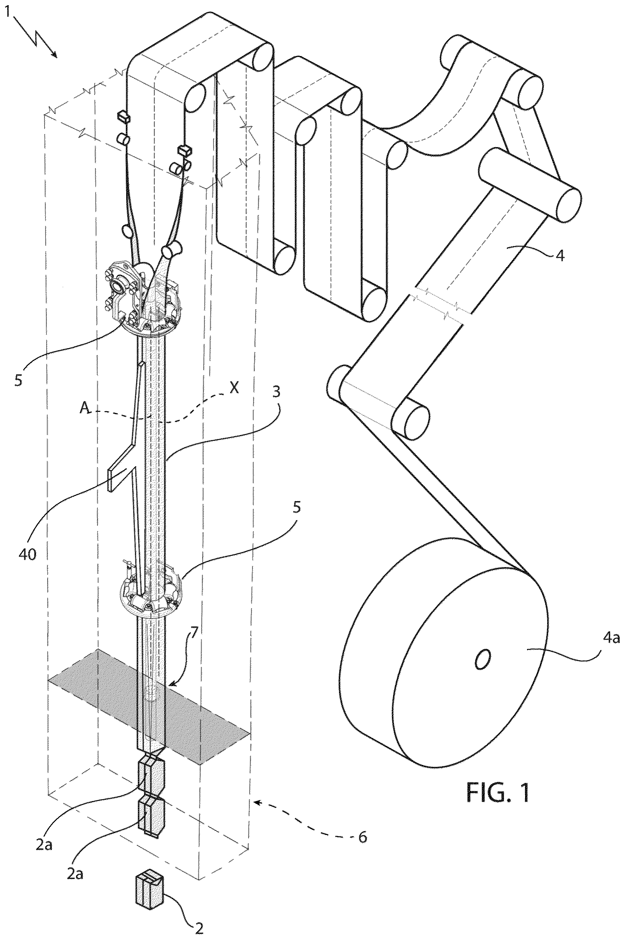

With reference to Figure 1, number 1 indicates as a whole a non-limiting example of a packaging apparatus for producing a plurality of packages 2 containing a pourable product, preferably a pourable food product such as pasteurized or UHT milk, water, fruit juice, wine, peas, beans, etc.

In detail, packaging apparatus 1 is configured to form, seal and fold packages 2 starting from a web 4 of packaging material, which is initially wound in a reel 4a, and then folded into a tube 3 of packaging material, as explained below.

Preferably, the packaging material has a multilayer structure (not shown), and comprises a layer of fibrous material, e.g. paper, covered on both sides with respective layers of heat-seal plastic material, e.g. polyethylene.

In the case of aseptic packages 2 for long-storage products, such as UHT milk, the packaging material also comprises a layer of gas-and-light barrier material, e.g. aluminum foil or ethylene vinyl alcohol (EVOH) film, which is superimposed on a layer of heat-seal plastic material, and is in turn covered with another layer of heat-seal plastic material, the latter forming the inner face of package 2 eventually contacting the pourable product.

As said, the packaging material is initially provided in the form of a web 4.

As schematically shown in Figure 1, the packaging apparatus 1 comprises:
- conveying means (not shown) configured to advance the web (4) along an advancement path;
- a tube folding device 5 for progressively folding the advancing web 4 into a tube 3 of packaging material, in a manner known and not described in detail;
- a sealing element 40 for providing tube 3 with a longitudinal seal, in a manner known and not described in detail;
- a forming and sealing unit 6 for forming tube 3 by imparting a predetermined external shape, corresponding to a precursor of the shape of package 2, to successive longitudinal portions of tube 3, and for sealing tube 3 at equally spaced cross-sections; and
- a filling system 7 for filling tube 3 with the pourable product.

Preferably, forming and sealing unit 6 has an axis X along which tube 3 is fed, in use.

Axis X is parallel to a straight direction, which preferably is a straight vertical direction.

Hence, in use, tube 3 is fed along axis X, downwards, and while being filled from above is formed and sealed by forming and sealing unit 6, according to a manner known and not described in detail.

More specifically, tube 3 is drawn (downwards) along axis X by forming and sealing unit 6 in a known manner.

In this way, a plurality of pillow packs 2a is obtained.

Packaging apparatus 1 may further comprise a folding unit (known per se and not shown) for folding the pillow packs 2a, thereby obtaining packages 2, according to a manner known and not described in detail.

Hence, packaging apparatus 1 is configured to form and seal a plurality of pillow packs 2a containing the pourable product starting from web 4 and tube 3 and then to fold the pillow packs 2a for obtaining the aforementioned formed, sealed and folded packages 2 containing the pourable product.

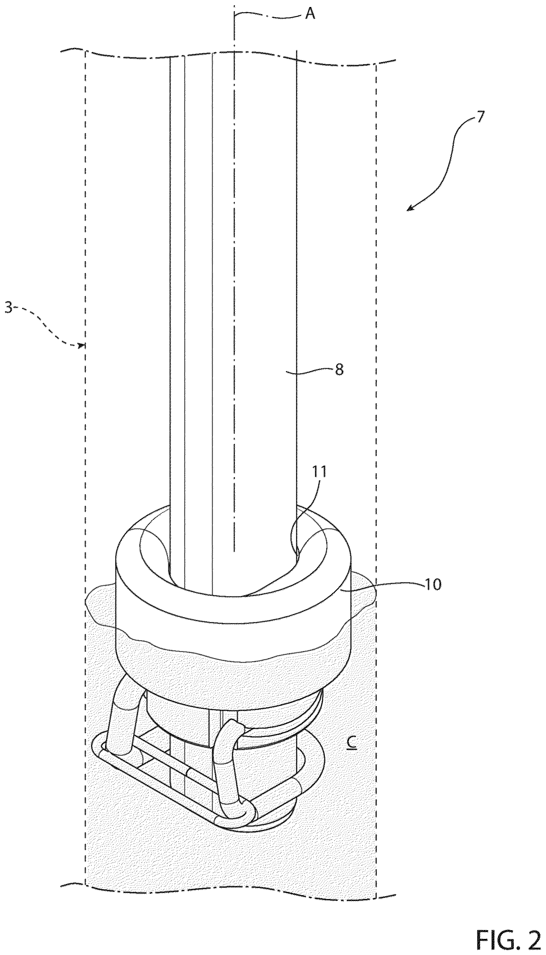

As visible in Figure 2, filling system 7 essentially comprises:
- a pipe 8 extending along a longitudinal axis A and configured to feed the pourable product into tube 3; and
- a floater 10 movably coupled with pipe 8 and configured to be arranged within tube 3 for floating in the pourable product contained therein.

In detail, pipe 8 is configured to be arranged, at least partially, within tube 3, as shown in Figure 1.

That is, in an assembled condition of packaging apparatus 1 and during normal operation of packaging apparatus 1, pipe 8 is arranged within tube 3, with its axis A parallel to axis X.

In other words, pipe 8 is inserted in and surrounded by tube 3 in formation.

Pipe 8 is configured for continuously fill tube 3 with pourable product, i.e. to continuously deliver a predetermined quantity of pourable product in tube 3, so that a column C of pourable product is defined and maintained in tube 3.

Depending on the flowrate of the pourable product supplied through pipe 8, column C defines a level of pourable product within tube 3 which is variable and controllable by varying the aforementioned flowrate.

Floater 10 is configured to float in column C to detect a level of the pourable product within tube 3.

To this end:
- packaging apparatus 1 includes a magnetic reader 13, preferably mounted to a fixed frame of packaging apparatus 1, outside tube 3; and
- floater 10 has a through hole 11 engaged by pipe 8, is movable with respect to pipe 8 along the axial direction (i.e. parallel to axis A), and is provided with at least one magnet 12 configured to magnetically interact with magnetic reader 13 for detecting a level of the pourable product within tube 3 (according to a manner known and not described in detail).

Accordingly, floater 10 and magnetic reader 13 define together a sensor device for detecting a level of the pourable product within tube 3.

In use, magnetic reader 13 is magnetically coupled with magnet 12 of floater 10 and is exposed to a magnetic flux depending on the relative position of floater 10 inside tube 3, which in turn depends on the level of the pourable product within tube 3.

Expediently, magnetic reader 13 is arranged outside tube 3 in a position adjacent to tube 3, extends parallel to axis X (and therefore to axis A) and has an axial size such as to cover the desired detectable range of level of pourable product. Preferably, the filling system 7 also includes the magnetic reader 13.

In light of the above, depending on the axial position of floater 10, the magnetic flux between magnet 12 and magnetic reader 13 varies.

Accordingly, packaging apparatus 1, or filling system 7, further comprises a control unit (not shown) configured to informatically interpret the variation in said magnetic flux and to output a filling level value of the pourable product within tube 3.

As visible in Figures 2, 3, 4 and 6, floater 10 has a central axis B.

According to the preferred and non-limiting embodiment shown, through hole 11 is arranged coaxial to axis B and pipe 8 engages through hole 11 coaxially, i.e. so that axis A corresponds to axis B.

In one embodiment, floater 10 may have a substantially toroidal or annular shape.

In one embodiment, floater 10 may have a substantially cylindrical shape, with through hole 11 in the middle.

In light of the above, floater 10 is axially engaged by pipe 8 at its through hole 11.

In practice, floater 10 and pipe 8 are coupled to one another at a coupling interface I.

In detail, floater 10 has an internal wall 14 laterally delimiting through hole 11, and pipe 8 has an external wall 15 defining a coupling portion thereof which engages through hole 11. In greater detail, internal wall 14 and external wall 15 are configured to face one another, with internal wall 14 being axially movable with respect to, and along, external wall 15.

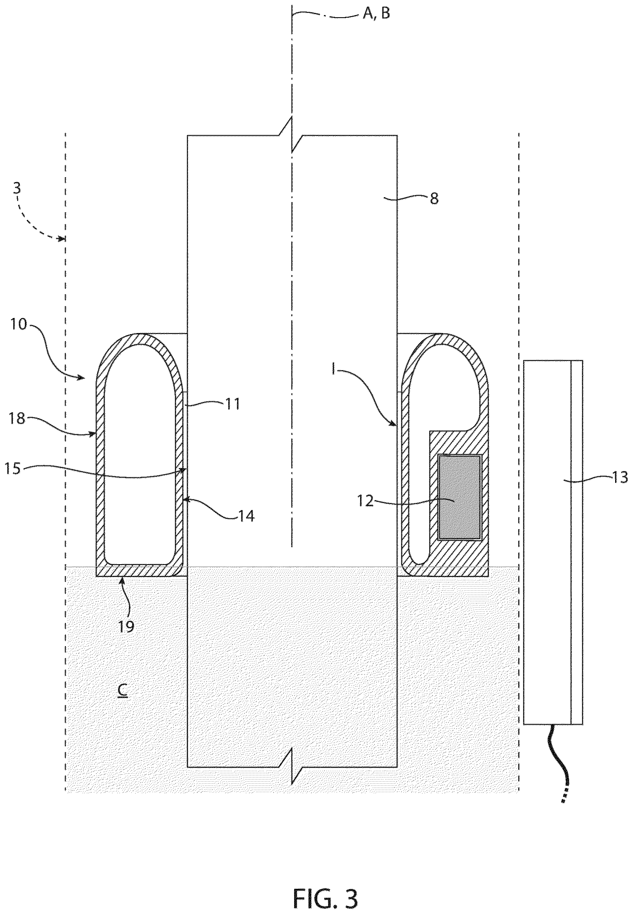

As visible in particular in Figure 3, floater 10 further comprises an external wall 18 and a base 19 which is configured for contacting the pourable product within tube 3, in use.

The aforementioned coupling interface I is defined by internal wall 14 and external wall 15 facing one another.

According to an aspect of the present invention, filling system 7 comprises means for at least limiting, and in particular preventing, a rotation of floater 10, with respect to pipe 8, about axis A. In particular, pipe 8 and floater 10 are shaped so as to prevent or at least limit a rotation of the floater 10, with respect to the pipe 8, about said longitudinal axis (A).

More specifically, coupling interface I is shaped in such a way to at least limit, and in particular prevent, the rotation of floater 10 with respect to pipe 8 and about axis A.

According to one preferred embodiment of the present invention, through hole 11 has a non-circular shape and pipe 8 has, at least at the external wall 15 thereof, i.e. at the coupling portion thereof, a non-circular cross-section with a shape which is complementary to the shape of through hole 11.

It is stated that with the term "cross-section" it is intended a section relative to a plane orthogonal to axes A and B.

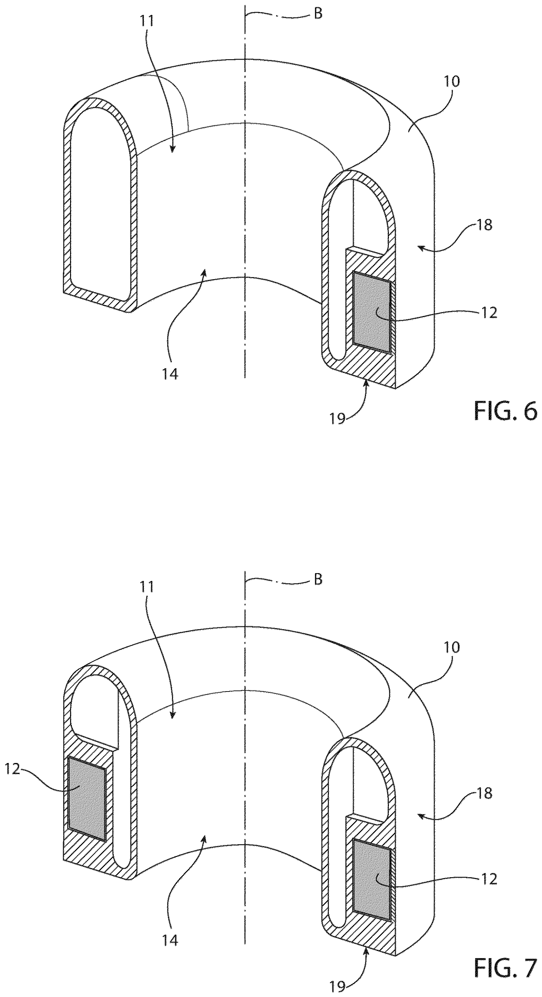

According to a further aspect of the present invention, floater 10 comprises a single magnet 12, preferably arranged at a radial portion of floater 10, i.e. occupying a radial sector or section of floater 10, with respect to axis B (Figure 6).

Conveniently, such single magnet 12 is arranged facing magnetic reader 13, i.e. floater 10 is coupled with pipe 8 so that magnet 12 faces magnetic reader 13.

Preferably, magnet 12 is oriented radially with respect to axis B. The Applicant has observed that such orientation allows to obtain an optimal magnetic coupling between magnet 12 and magnetic reader 13.

Thanks to the peculiar conformation of coupling interface I, namely of through hole 11 and pipe 8, a rotation of floater 10 with respect to pipe 8 and within tube 3 is prevented or at least limited.

This results in a prevented, or at least limited, rotation with respect to magnetic reader 13, which as said is fixed with respect to tube 3 and pipe 8.

Hence, there is no need for providing floater 10 with a circular array of magnets angularly distributed about axis B, as it is the case for the known floaters, since an alignment of magnet 12 with magnetic reader 13 is always ensured by the fact that floater 10 cannot rotate within tube 3.

In fact, since the floaters according to the state of the art are devoid of any anti-rotation means, and therefore can freely rotate about the respective pipe, the circular array of magnets is necessary for ensuring the magnetic coupling with the magnetic reader.

Conversely, floater 10 can be provided with a single magnet 12 or a couple of magnets 12 and still effectively provide a reliable detection of the level of pourable product within tube 3.

Since the weight of floater 10 is almost entirely defined by the weight of its magnetic parts, the weight of floater 10 is largely reduced with respect to the known floaters.

Ultimately, this allows to reduce the minimum height of column C, since the minimum level of pourable product necessary to effectively maintain floater 10 afloat and ensuring its nominal operation can be lowered.

According to a preferred embodiment of the present invention, shown in Figures 2, 3 and 4, through hole 11 has a substantially elliptical or oval shape and external wall 15 (i.e. the aforesaid coupling portion of pipe 8) has a substantially elliptical or oval shaped cross-section.

The Applicant has observed that such peculiar conformation constitutes the optimal compromise both in terms of preventing/limiting the rotation of floater 10 and in terms of ease of manufacturing and cleaning floater 10 and pipe 8.

According to an alternative embodiment not shown, through hole 11 as a polygonal shape and external wall 15 (i.e. the aforesaid coupling portion of pipe 8) has a polygonal-shaped cross-section.

For example, through hole 11 and the cross-section of external wall 15 may be substantially squared, pentagonal, hexagonal, triangular, etc., with or without rounded edges.

This "polygonal" configuration ensures an even better anti-rotation effect of floater 10, despite being slightly more difficult to produce.

In light of the above, any shape which effectively prevents or limits the rotation of floater 10 with respect to pipe 8 may be implemented, so that floater 10 can be equipped with only a single magnet 12 (or a couple of magnets 12) and so that such single magnet 12 (or couple of magnets 12) is maintained facing magnetic reader 13 during operation of filling system 7 and packaging apparatus 1.

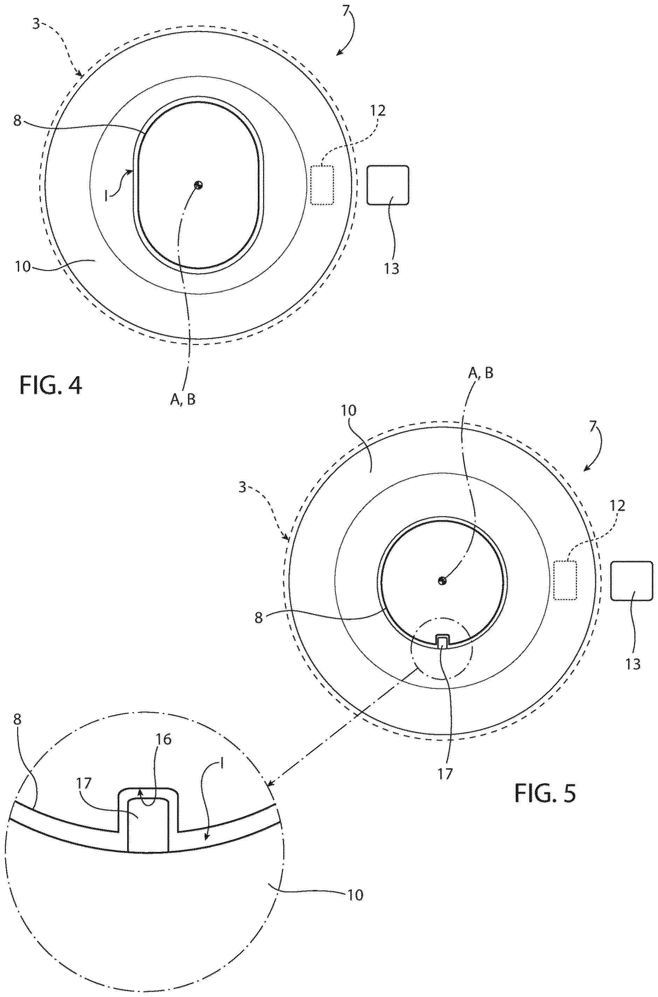

Figure 5 shows an alternative embodiment of filling system 7 according to the present invention.

In particular, according to this embodiment, one of the internal wall 14 and external wall 15 includes a groove 16, and the other of the internal wall 14 and external wall 15 includes a protrusion 17 which protrudes from said other towards the groove 16 and engages the groove 16.

Additionally, protrusion 17 has a shape complementary to the shape of groove 16.

In particular, groove 16 and protrusion 17 extend in the radial direction relative to axes A and B, respectively.

In practice, the engagement of protrusion 17 into groove 16 defines the aforesaid anti-rotation means, i.e. the aforesaid coupling interface I which is shaped in such a way to prevent or at least limit the rotation of floater 10 with respect to pipe 8.

In this way, rotation of floater 10 is prevented even more effectively.

Moreover, thanks to the presence of groove 16 and protrusion 17, through hole 11 and the cross-section of pipe 8 can have a circular shape, which is easier to obtain.

Conveniently, groove 16 is obtained on external wall 15 of pipe 8 and floater 10 includes protrusion 17 on internal wall 14.

In this way, the manufacture and production of pipe 8 and floater 10 is simplified, since it is easier to provide pipe 8 (which is usually the biggest component amongst the two) with a groove 16 than with a protrusion 17.

Conveniently, groove 16 is defined by a slot extending in the axial direction (with respect to axis A), and protrusion 17 is defined by a rib or bar extending in the axial direction (with respect to axis B).

In other words, protrusion 17 defines an anti-rotation bar of floater 10.

In this way, the axial movement of floater 10 with respect to pipe 8 is ensured, while still effectively preventing a rotation thereof.

Moreover, the assembly of filling system 7 is eased, since it is sufficient to radially align groove 16 and protrusion 17, to axially engage through hole 11 with pipe 8 and finally to slide pipe 8 in through hole 11, i.e. protrusion 17 in groove 16.

Figure 7 shows an alternative embodiment of floater 10 according to the present invention.

In particular, floater 10 according to this preferred embodiment comprises two magnets 12, such magnets 12 being arranged at opposite radial positions with respect to axis B.

In this way, positioning errors during assembly of filling system 7 are reduced, and in particular fully prevented, since it is ensured that at least one magnet 12 is always aligned with magnetic reader 13, while at the same time obtaining the above effect of a largely reduced weight of floater 10 with respect to the known floaters according to the prior art.

As visible in particular in Figures 3, 6 and 7, an axial size of floater 10 along axis B is advantageously smaller than a maximum size of floater 10 along a transversal direction perpendicular to axis B. In other words, being floater 10 according to this non-limiting preferred embodiment toroidal or annular, the axial size of floater 10 is smaller than the radial size of floater 10.

In particular, the axial height of floater 10 is smaller than a diameter of floater 10. In particular, the axial height of floater 10 is lower than 60 mm, preferably lower than 40 mm, even more preferably lower than 30 mm.

The Applicant has observed that such a configuration contributes to further reduce the weight of floater 10 and also increased its floating properties, so that a more efficient filling level detection can be performed.

The advantages of filling system 7 according to the present invention will be clear from the foregoing description.

In particular, the height of column C of pourable product inside tube 3 can be reduced, which results in a reduction of the overall height of packaging apparatus 1.

This is achieved thanks to the peculiar conformation of floater 10 and pipe 8, which conformation impedes a rotation of floater 10 with respect to pipe 8, and more specifically with respect to magnetic reader 13, while allowing at the same time an axial movement of floater 10 in the axial direction.

A rotationally fixed floater 10 within tube 3 allows for maintaining a single magnet 12 in alignment with (i.e. facing) magnetic reader 13 during operation.

Hence, a single magnet 12 is sufficient to perform the detection of the filling level of the pourable product of column C within tube 3, which results in a lighter floater 10 and, ultimately, in column C whereby the minimum level of pourable product necessary to ensure buoyancy of floater 10 can be decreased.

Clearly, changes may be made to filling system 7 as described herein without, however, departing from the scope of protection as defined in the accompanying claims.

## Claims

1. Filling system (7) for filling a tube (3) of packaging material for the production of packages (2) containing pourable product, the filling system (7) comprising:
- a pipe (8) extending along a longitudinal axis (A), and configured for feeding pourable product into the tube (3) ;
- a floater (10) movably coupled with the pipe (8) and configured to be arranged within the tube (3) for floating in the pourable product;
wherein the floater (10) has a through hole (11) engaged by the pipe (8), is movable with respect to the pipe (8) along the axial direction, and is provided with at least one magnet (12) configured to magnetically interact with a magnetic reader (13) for detecting a level of the pourable product within the tube (3);
and wherein the pipe (8) and the floater (10) are shaped so as to prevent or at least limit a rotation of the floater (10), with respect to the pipe (8), about said longitudinal axis (A).

2. Filling system as claimed in claim 1, wherein the floater (10) and the pipe (8) are coupled to one another at a coupling interface (I);
and wherein the coupling interface (I) is shaped in such a way to prevent or at least limit the rotation of the floater (10) with respect to the pipe (8) and about said longitudinal axis (A).

3. Filling system as claimed in claim 1 or 2, wherein the through hole (11) has a non-circular shape and the pipe (8) has, at least at a coupling portion thereof which engages the through hole (11), a non-circular cross-section with a shape which is complementary to the shape of the through hole (11).

4. Filling system as claimed in claim 3, wherein the through hole (11) has a substantially elliptical or oval shape;
and wherein said coupling portion of the pipe (8) has a substantially elliptical or oval shaped cross-section.

5. Filling system as claimed in claim 3, wherein the through hole (11) as a polygonal shape and said coupling portion of the pipe (8) has a polygonal-shaped cross-section.

6. Filling system as claimed in any one of the claims 1 to 3, wherein the floater (10) has an internal wall (14) laterally delimiting the through hole (11) and the pipe (8) has an external wall (15) defining a coupling portion thereof which engages the through hole (11);
wherein one of the internal wall (14) and the external wall (15) includes a groove (16), and the other of the internal wall (14) and the external wall (15) includes a protrusion (17) which protrudes from said other towards said groove (16) and engages said groove (16),
and wherein the protrusion (17) has a shape complementary to the shape of the groove (16).

7. Filling system as claimed in claim 6, wherein the groove (16) is obtained on the external wall (15) of the pipe (8) and the floater (10) includes the protrusion on said internal wall (14).

8. Filling system as claimed in claim 6 or 7, wherein the groove (16) is defined by a slot extending in the axial direction, and the protrusion (16) is defined by a rib or bar extending in the axial direction.

9. Filling as claimed in any one of the foregoing claims, wherein the floater (10) has a central axis (B) and comprises one or more magnets (12) which are non-uniformly distributed about the central axis (B).

10. Filling system as claimed in claim 9, wherein the floater (10) comprises one single magnet (12).

11. Filling system as claimed in claim 9, wherein the floater (10) comprises only two of said magnets (12), the magnets (12) being arranged at opposite radial positions with respect to the central axis (B).

12. Filling system as claimed in any one of the foregoing claims, wherein the floater (10) has a central axis (B) and wherein an axial size of the floater (10) along the central axis (B) is smaller than a maximum size of the floater (10) along a transversal direction perpendicular to the central axis (B).

13. Packaging apparatus (1) for producing packages (2) containing a pourable product starting from a web (4) of packaging material, the packaging apparatus (1) comprising:
- conveying means configured to advance the web (4) along an advancement path;
- a tube folding device (5) for folding the advancing web (4) of packaging material into a tube (3);
- a sealing element (40) for longitudinally sealing the tube (3);
- a forming and sealing unit (6) for forming and transversally seal the tube (3) and sealing the tube (3) at cross-sections thereof, thereby obtaining a plurality of packs (2a) from which the packages (2) are subsequently obtained;
- a filling system (7) as claimed in any one of the foregoing claims and configured for filling the tube (3) with the pourable product.
